# EUROPÄISCHE PATENTANMELDUNG

(11) **EP 2 251 728 A1**
(43) Veröffentlichungstag der Anmeldung: **17.11.2010**
(21) Anmeldenummer: 10003802.5
(22) Anmeldetag: 09.04.2010
(51) Int. Cl.: G02B 6/44

(54) **Anschlussdose, insbesondere für Glasfaser-Steckverbinder**

(30) Priorität: 17.04.2009 CH 6122009
(71) Anmelder: Feller AG, 8810 Horgen (CH)
(72) Erfinder: Sollberger, Armin, 4226 Breitenbach (CH); Wälti, Philippe, 5077 Elfingen (CH); Artho, Daniel, 8135 Langnau a.A. (CH)
(74) Vertreter: Schalch, Rainer

(57) **Zusammenfassung**

Bei einer Anschlussdose, die insbesondere für Glasfaserverbindungen vorgesehen ist, ist ein Träger (10) für die Steckverbinder schwenkbar an einer Haspel (3) für die Glasfasern angelenkt und liegt andererseits in Ruhestellung an einem äusseren Abdeckrahmen (20) der Dose an. Dies ergibt eine stets sichere Lage der Steckverbinder, die Beschädigungen der Glasfasern vermeidet, auch wenn der Abdeckrahmen für Montagearbeiten oder bei Renovationsarbeiten entfernt wird, was einfach erfolgen kann.

## Beschreibung

### Hintergrund

Die Erfindung betrifft eine Anschlussdose, umfassend eine zur Wandmontage ausgeführte Befestigungsplatte, eine an der Befestigungsplatte befestigbare Kabelaufnahme, insbesondere eine Haspel, und einen Steckverbinder-Träger.

### Stand der Technik

Anschlussdosen für die Wandmontage und insbesondere Unterputzmontage sind bekannt. Die Weiterführung der bekannten Glasfasertechnologie zur Übertragung von Daten via Glasfaserleitungen mit Glasfaserkabeln über die Ortszentralen hinaus bis in die einzelnen Haushalte bedingt entsprechende Anschlussdosen, an denen Steckverbinder für Glasfaserkabel angeordnet sind. Glasfaserleitungen bzw. Glasfaserkabel sind empfindlich auf mechanische Beanspruchung und insbesondere ist stets ein Mindestbiegeradius einzuhalten. Bei dessen Unterschreitung droht eine dauerhafte Beeinträchtigung der Übertragungsparameter oder gar ein Faserbruch. Aus der CH-PS 680 167 ist eine Steckverbinderhalterung bekannt, bei welcher der die Steckverbinder für optische oder galvanische Verbindungen aufnehmende Halter an einer Frontarmatur fixiert ist, die vor der Befestigungsplatte angeordnet ist, diese aber nicht gegen Sicht abdeckt. Zusätzlich ist der Halter über ein flexibles Band mit einem Befestigungsrahmen verbunden, der hinter der Befestigungsplatte an dieser befestigt ist. Wird die Frontarmatur entfernt und der Halter von der Frontarmatur gelöst, z.B. für die fachgerechte Montage der Steckverbinder oder bei Renovationsarbeiten an der Wand, wie Verputzarbeiten oder Malerarbeiten, so "hängt" der Halter mit den daran montierten Steckverbindern lediglich an dem flexiblen Band. Glasfaserkabel können so geknickt oder unzulässig stark gebogen werden. Ferner ist dadurch kein "Putzausgleich" beim Aufbringen einer weiteren Verputzschicht auf die Wand möglich, da die Frontarmatur zusammen mit der Befestigungsplatte in der tieferen Verputzschicht "versinkt".

### Darstellung der Erfindung

Der Erfindung liegt die Aufgabe zu Grunde, eine verbesserte Anschlussdose zu schaffen.
Die Aufgabe wird dadurch gelöst, dass der Steckverbinder-Träger schwenkbar an der Kabelaufnahme bzw. Haspel angelenkt und an einem die Befestigungsplatte allseitig überragenden und gegen Sicht abdeckenden Rahmen aufliegend angeordnet ist.
Durch die schwenkbare Anlenkung des Steckverbinder-Trägers für die Steckverbinder an der Kabelaufnahme, die insbesondere als Haspel ausgeführt ist, bildet diese mit dem Steckverbinder-Träger und der Befestigungsplatte eine Einheit, die stets eine definierte Lage des Steckverbinder-Trägers zu der Kabelaufnahme bewirkt und somit stets ein Knicken der von der Kabelaufnahme zu den Steckverbindern geführten Leitungen sicher verhindert. Ferner ist dadurch auch der Mindestbiegeradius sicher einhaltbar, da nur eine definierte Schwenkbewegung des Trägers um die Anlenkstelle möglich ist. Diese Einheit erlaubt auch die einfache Demontage und Montage des Abdeckrahmens (und des darüber liegenden Deckels), bei der der Steckverbinder-Träger an der Kabelaufnahme verbleibt und bei der die inneren Glasfaserverbindungen (und/oder Kupferkabelverbindungen) in der Anschlussdose nicht gelöst werden müssen. Somit ist der Schutz der Fasern zu jeder Zeit gewährleistet (Zugentlastung und eingehaltener Radius der Fasern). Der an der Kabelaufnahme schwenkbar angelenkte, am Abdeckrahmen aufliegende Steckverbinder-Träger macht ferner Lageänderungen des Abdeckrahmens mit, die sich bei Renovationen durch zusätzlich aufgetragene Putzschichten ergeben. Ein "Versinken" der Steckverbinder nach Renovationen wird somit verhindert und Renovationen (Malen, Tapezieren, frisch verputzen) sind auch durch die einfache Entfernbarkeit des Abdeckrahmens, ohne Beeinträchtigung der Glasfaserkabel, sehr erleichtert.

Bevorzugt ist die Kabelaufnahme an der Hinterseite der Befestigungsplatte angeordnet, was es erlaubt, die Anschlussdose im sichtbaren, aus der Wand ragenden Bereich sehr flach zu halten. Die Einheit aus Kabelaufnahme und Steckverbinder-Träger ist bevorzugt so gebildet, dass der Steckverbinder-Träger mindestens einen nach oben ragenden Arm aufweist, der über jeweils mindestens einen Zapfen die Schwenkverbindung mit mindestens einer entsprechenden Zapfenaufnahme an der Kabelaufnahme bildet; insbesondere können zwei solcher Arme vorgesehen sein. Dies ergibt eine einfache und stabile Ausgestaltung. Besonders bevorzugt ist dabei, dass die Zapfenaufnahme von einem Langloch gebildet ist, dessen Längserstreckung im Wesentlichen senkrecht zur Befestigungsplatte bzw. zur Wand verläuft, was die Anpassung an unterschiedliche Niveaus von Befestigungsplatte und fertiger Wandoberfläche ohne Veränderung des Austrittswinkels der Steckverbinder erlaubt, da die Schwenkachse auch eine Translation im Langloch ausführen kann. In einer alternativen Ausführung weist der Steckverbinder-Träger mindestens einen nach oben ragenden Arm auf, der über jeweils mindestens ein elastisches Scharnier einstückig mit der Haspel verbunden ist. Solche einstückigen Kunststoffscharniere (auch als Filmscharniere bezeichnet) erlauben ebenfalls die definierte Schwenkbewegung des Steckverbinder-Träger an der Einheit von Haspel bzw. Kabealaufnahme und Steckverbinder-Träger. Solches ergibt sich auch in einer weiteren alternativen Ausführung, bei welcher der Steckverbinder-Träger mindestens einen nach oben ragenden Arm aufweist, welcher in seiner Ruhestellung den Steckverbinder-Träger am Abdeckrahmen aufliegend hält und der als elastisch verformbarer Arm ausgestaltet ist, der die Schwenkbewegung ermöglicht. Ein Arm oder mehrere Arme mit einer definierten Ruhestellung, aus der eine Verformung unter Krafteinwirkung bzw. ein momentanes Verbiegen des Arms möglich ist, der anschließend wieder in die Ruhestellung zurückkehrt, ergibt ebenfalls eine Einheit aus Haspel und Steckverbinder-Träger, die stets die Glasfasern schützt. Ein solcher Arm oder solche Arme können aus metallischen Blatt- oder Schraubenfedern gebildet sein oder aus Kunststoff bestehen.
Bevorzugt ist die Schwenkverbindung zwischen Kabelaufnahme und Steckverbinder-Träger mit einer Schwenkwinkelbegrenzung versehen, z.B. in Form eines mechanischen Anschlags oder mehrerer Anschläge. Ferner kann es vorgesehen sein, dass der am Abdeckrahmen aufliegende Steckverbinder-Träger dort lösbar fixiert ist, z.B. mittels einer einschnappenden Verbindung.

### Kurze Beschreibung der Zeichnungen

Im Folgenden werden Ausführungsbeispiele der Erfindung anhand der Zeichnungen näher erläutert. Dabei zeigt
Figur 1 eine explosionsartige Darstellung der einzelnen Teile eines Ausführungsbeispiels einer Anschlussdose gemäss der Erfindung;
Figur 2 eine schaubildliche Ansicht einer Anschlussdose gemäss Figur 1 in montiertem Zustand und mit Steckverbindern;
Figur 3 die Anschlussdose von Figur 2 mit entferntem Deckel und etwas nach oben geschwenktem Steckverbinder-Träger;
Figur 4 eine Ansicht der Anschlussdose von Figur 3 mit weiter nach oben geschwenktem Steckverbinder-Träger;
Figur 5 eine Ansicht der Anschlussdose der Figuren 2 bis 4 mit entferntem Abdeckrahmen; und
Figur 6, Figur 7 und Figur 8 jeweils eine Vertikalschnittansicht durch die Anschlussdose zur Erläuterung der versetzten Montage, insbesondere zum Putzausgleich.

### Wege zur Ausführung der Erfindung

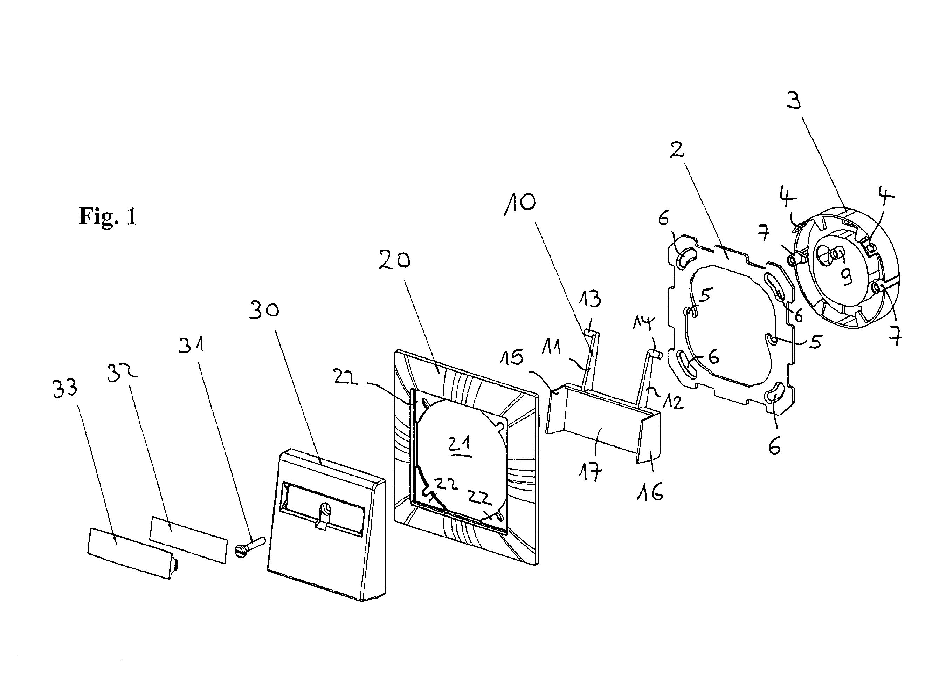

Figur 1 zeigt eine explosionsartige Darstellung der einzelnen Teile einer bevorzugten Ausführungsform der Erfindung. Dabei ist eine Befestigungsplatte 2 vorgesehen, welche zur Befestigung der Anschlussdose an einer Wand dient, welche eine Gebäudewand sein kann oder z.B. auch eine Wandung eines Möbels. Die Befestigungsplatte weist dazu Ausnehmungen 6 auf, welche zur Schraubbefestigung der Befestigungsplatte an der Wand dienen, wie dies bekannt ist. Die Befestigungsplatte 2 weist ferner Befestigungsausnehmungen 5 auf, an welchen eine Kabelaufnahme 3, die insbesondere als Haspel 3 ausgebildet ist, z. B. mittels Schrauben befestigt wird, welche in Schraubenaufnahmen 7 des Haspels 3 eingeschraubt werden. In der dargestellten Ausführungsform ist der Haspel 3 hinter der Befestigungsplatte 2 angeordnet, so dass er in eine Ausnehmung der Wand zu liegen kommt. Es ist somit eine Lösung als sogenannte Unterputzdose dargestellt. Die Haspel 3 ist für die Aufnahme von Windungen von Glasfaserkabeln vorgesehen, damit diese unter Einhaltung eines zulässigen Biegeradius von der Wandausnehmung her, in welche die Haspel zu liegen kommt, in die Anschlussdose eingeführt werden können. Dies wird hier, da bekannt, nicht weiter erläutert. Die Haspel 3 ist so ausgeführt, dass an ihr der Steckverbinder-Träger 10 schwenkbar angelenkt ist. Dazu weist die Haspel in diesem Beispiel zwei Anlenkteile 4 mit Ausnehmungen auf, in welche die Zapfen 13 und 14 des Steckverbinder-Träger 10 aufgenommen werden. Der Steckverbinder-Träger 10 ist mit seiner Steckverbinder-Aufnahme 17 zur Aufnahme von nicht dargestellten Steckverbindern, insbesondere für Glasfasersteckverbinder ausgerüstet. Es können aber auch Steckverbinder für Kupferkabel vorgesehen sein und die Anschlussdose kann zusätzlich zu den Glasfaserkabeln oder ausschliesslich auch für Kupferkabel verwendet werden. In diesem Fall muss die Haspel nicht die dargestellte Form zur Kabelaufwicklung aufweisen. Der Steckverbinder-Träger 10 ist an seiner Aufnahme 17 mit nicht dargestellten Haltemitteln versehen, welche spezifisch auf die Steckverbinder abgestimmt sind, so dass die Steckverbinder am Träger 10 befestigt werden können, was - da für den Fachmann bekannt - hier nicht im Detail erläutert wird. Insbesondere kann der Steckverbinder-Träger 10 seitliche Flansche 15 und 16 aufweisen. In dem gezeigten Beispiel weist der Steckverbinder-Träger 10 zwei starre Arme 11 und 12 auf, welche an ihrem von der Steckverbinder-Aufnahme 17 abgewandten Ende die erwähnten Zapfen 13 und 14 aufweisen. Anstelle von zwei Armen könnte auch ein einzelner, z.B. mittig angeordneter Arm vorgesehen sein, von welchem die beiden Zapfen beidseitig abragen. In diesem Falle wären die Zapfenaufnahmen 4 an der Haspel 3 entsprechend anders angeordnet. Auch mehr als zwei Arme können vorgesehen sein. Anstelle der Anlenkung mittels einer Schwenklagerung durch die Zapfen 13 und 14 und die Aufnahmen 4, kann der Steckverbinder-Träger auch einstückig mit der Kabelaufnahme bzw. der Haspel ausgebildet sein. Indes ist dann ein Scharnier zwischen Steckverbinder-Träger und Kabelaufnahme vorzusehen, welches die gewünschte Schwenkbewegung um eine definierte Anlenkstelle des Steckverbinder-Trägers an der Kabelaufnahme ermöglicht. Entsprechende Filmscharniere aus Kunststoff sind bekannt. Diese würden dann anstelle der Zapfen 13 und 14 die starren Arme 11 und 12 mit der Kabelaufnahme 3 verbinden. In einer weiteren Ausführungsform könnte auch vorgesehen sein, dass die Arme 11 und 12 selber eine beschränkte Elastizität aufweisen, welche die Schwenkbewegung des Steckverbinder-Träger ermöglicht, wenn die Arme einstückig mit der Haspel 3 an einer definierten Anlenkstelle verbunden sind. Weiter ist ein Abdeckrahmen 20 vorgesehen, welcher auf grundsätzlich bekannte Weise die Befestigungsplatte 2 vollständig gegen Sicht von vorne und von der Seite abdeckt. Gemäss der vorliegenden Erfindung kommt der Steckverbinder-Träger 10 zum Aufliegen auf den Abdeckrahmen, tritt also mit seiner Steckverbinder-Aufnahme und teilweise mit den Armen durch die Öffnung 21 des Abdeckrahmens hindurch und liegt insbesondere auf den unteren Eckteilen 22 des Abdeckrahmens und/oder dem Rand der Öffnung 21 des Abdeckrahmens 20 auf.

Bevorzugt ist weiter ein Deckel 30 vorgesehen, welcher insbesondere über eine Schraube 31 mit der Schraubenaufnahme 9 in der Kabelaufnahme bzw. Haspel verbunden ist, so dass der Abdeckrahmen 20 durch den mit der Haspel verschraubten Deckel 30 gegen die Befestigungsplatte bzw. die Wand gezogen wird, so dass der Abdeckrahmen über der Befestigungsplatte 2 fixiert ist und an der Wand aufliegt. Ein Schild 32 und ein Fenster 33 können zur Beschriftung der Anschlussdose vorgesehen sein.

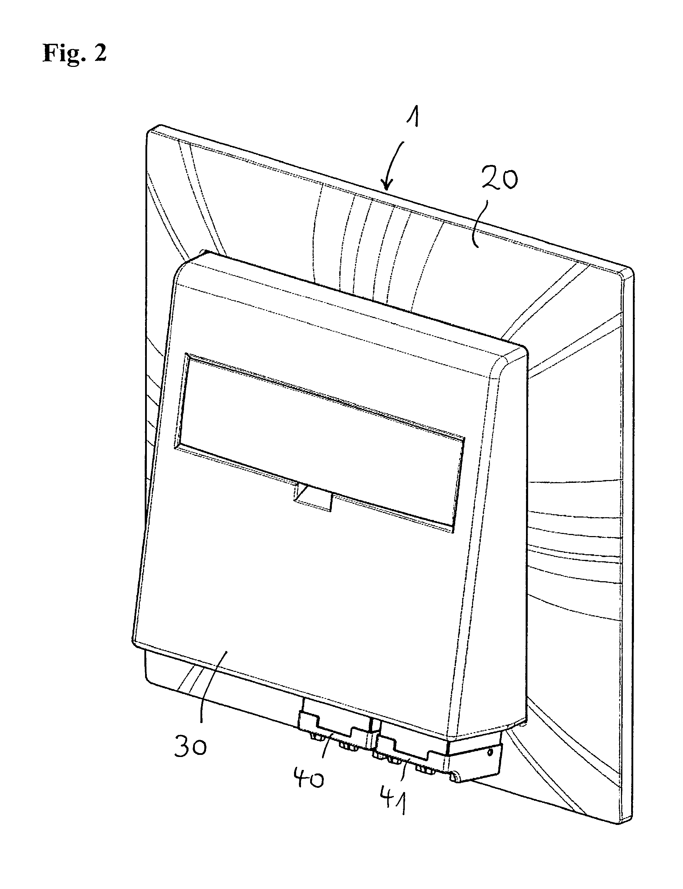

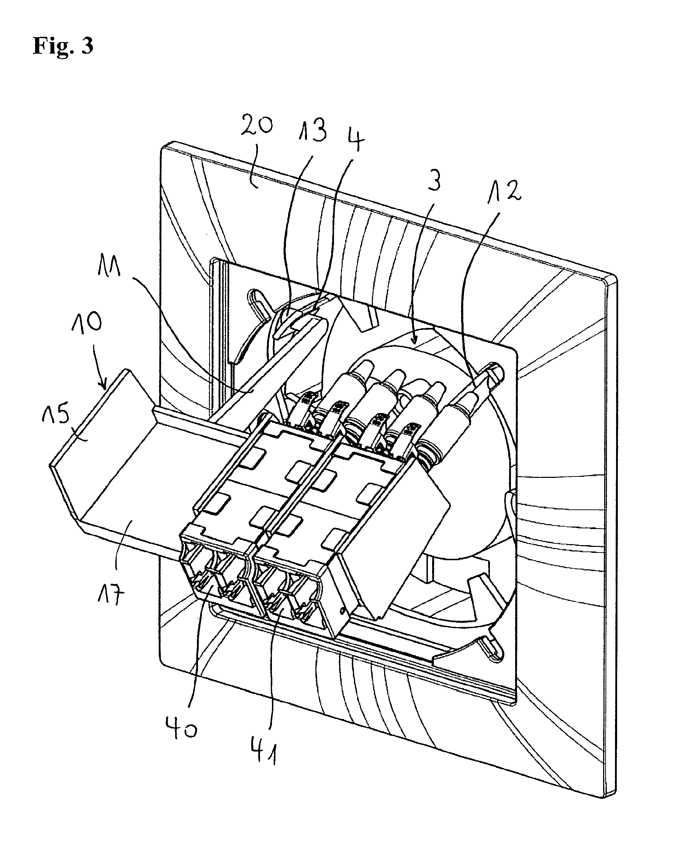

Figur 2 zeigt die Anschlussdose in montierter Form in schaubildlicher Darstellung, wobei hier auch Steckverbinder 40 und 41 am Steckverbinder-Träger 10 befestigt sind und für das Einführen von Verbindungssteckern bereit stehen. Gleiche Bezugszeichen wie bis anhin verwendet bezeichnen dabei gleiche Elemente. Dies gilt auch für die folgenden Figuren 3-8.

Insbesondere zeigt nun Figur 3 die Anschlussdose 1 mit entferntem Deckel 30, aber mit montierten Steckverbindern 40 und 41. An deren haspelseitigem Ende sind Glasfasersteckverbinder gezeigt, welche die in die Anschlussdose eingeführten Glasfaserkabel mit den Steckverbindern 40 und 41 koppeln; die Glasfasern oder allenfalls die Kupferkabel können aber auf beliebige Weise mit den zugehörigen Steckverbindern gekoppelt sein. Dies wird, da bekannt, hier nicht weiter erläutert. Ersichtlich ist, wie der Steckverbinder-Träger 10 mittels der Arme 11 und (teilweise ersichtlich) 12 an der Haspel 3 schwenkbar angeordnet ist. Die Figur 3 zeigt dabei eine etwas nach oben geschwenkte Stellung des Steckverbinder-Trägers 10, so dass dieser nicht an dem Abdeckrahmen 20 aufliegt, wie das der normalen Betriebsstellung von Figur 2 entsprechen würde. In den Figuren 3 und den folgenden Figuren ist der Steckverbinder-Träger so dargestellte, dass er einfach auf der von vorne sichtbaren Vorderseite des Abdeckrahmens aufliegt. Dies ist eine mögliche Ausführungsform. Der Steckverbinder-Träger 10 kann aber auch so ausgeführt werden, dass er beim Aufliegen am Abdeckrahmen auch an diesem lösbar fixiert ist, z.B. durch eine Schnappverbindung oder auch durch eine Schraubverbindung.

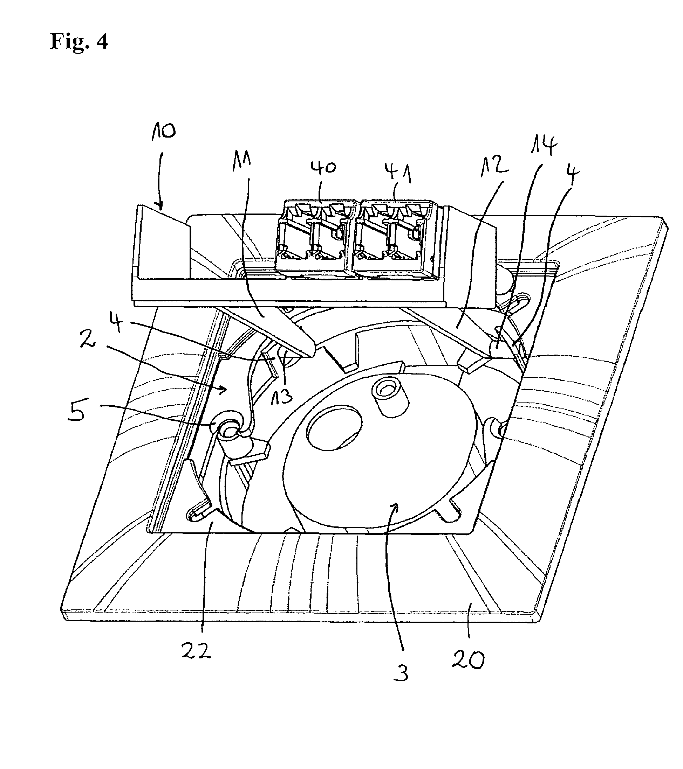

Figur 4 zeigt eine ähnliche Darstellung wie Figur 3, wobei der Steckverbinder-Träger 10 weiter vom Abdeckrahmen 20 weggeschwenkt ist und die Ansicht so gewählt ist, dass beide Arme 11 und 12 gut ersichtlich sind. Ebenfalls ist ersichtlich, dass die Zapfen 13 und 14 in Langlöchern 4 angeordnet sind. Dies hat den Vorteil, dass sich eine bessere Anpassung an zusätzliche Verputzschichten an der Wand ergibt, was anhand der Schnittdarstellungen noch erläutert wird.

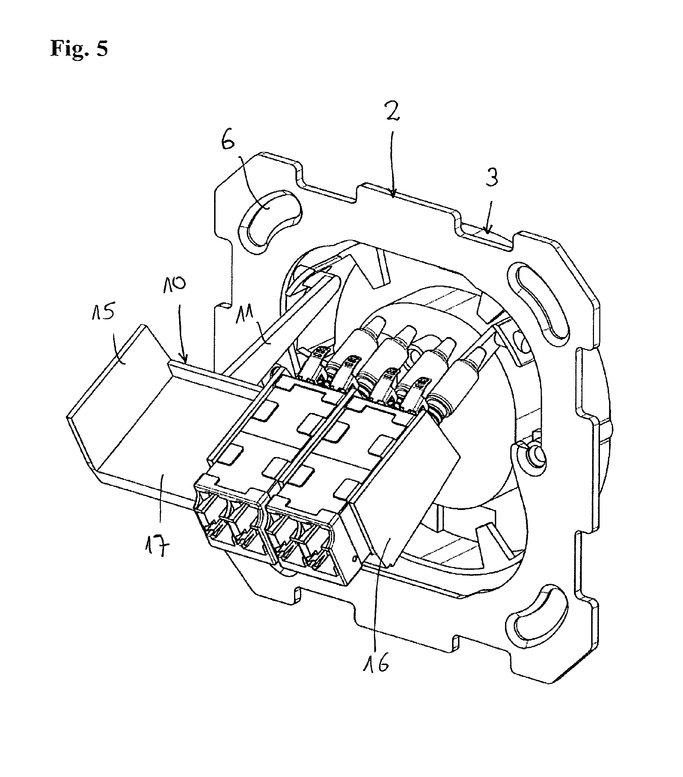

Figur 5 schliesslich zeigt die bisher erläuterte Ausführungsform ohne den Abdeckrahmen 20. Dieser kann eben gerade auf einfache Art und Weise entfernt werden, indem der Deckel 30 gelöst wird, womit auch der Abdeckrahmen 20 frei wird, welcher über den Steckverbinder-Träger 10 hinweg von der Wand entfernt werden kann, da die Öffnung 21 so gross ist, dass der Abdeckrahmen über den montierten Steckverbinder-Träger hinweg entfernt werden kann, wobei gemäss der Erfindung der Steckverbinder-Träger 10 an der Kabelaufnahme bzw. Haspel schwenkbar angelenkt bleibt. Für Montage oder Verputzarbeiten oder Malerarbeiten, ergibt sich dann eine Situation wie in Figur 5 gezeigt, worin der Abdeckrahmen weggenommen worden ist, damit diese Arbeiten insbesondere an der Wand, ausgeführt werden können und dennoch die Glasfaserkabel biegegeschützt an den Steckverbindern angeschlossen bleiben, da diese durch den schwenkbar angelenkten Steckverbinder-Träger gegen übermässige Beanspruchung geschützt sind. Es kann insbesondere auch eine Begrenzung für die Schwenkbewegung vorgesehen sein, z.B. durch einen oder mehrere nicht dargestellte mechanische Anschläge, welche die Auslenkung des Steckverbinder-Trägers 10 beim Schwenken nach oben begrenzen. In der dargestellten Form kann der Steckverbinder-Träger mit den Steckverbindern auf einfache Weise durch eine provisorische Umhüllung geschützt werden und ist dann unempfindlich gegen Gipser- und Malerarbeiten an der Wand.

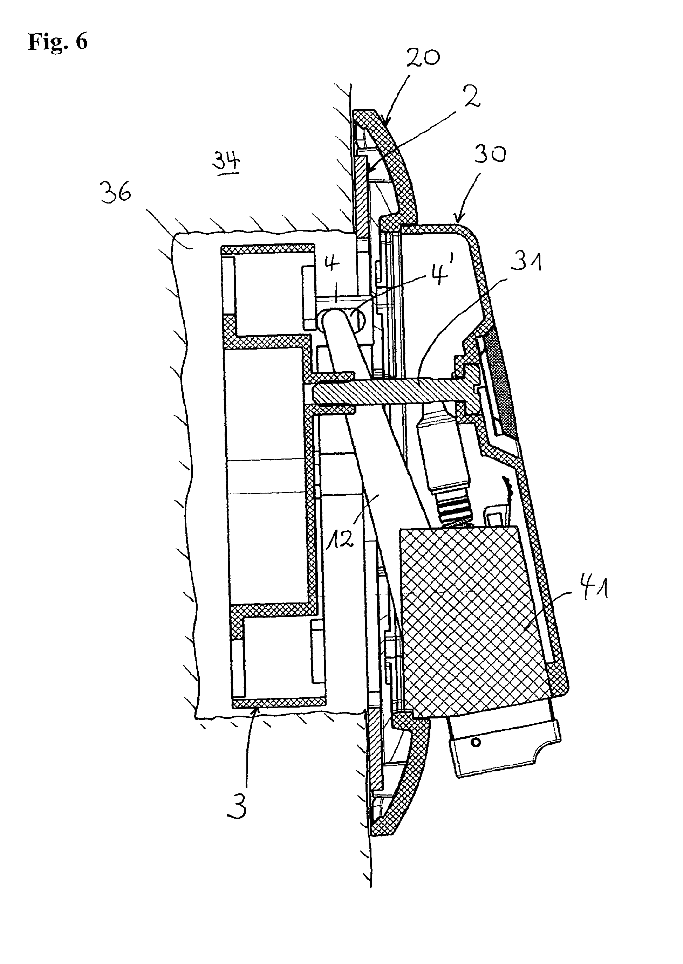

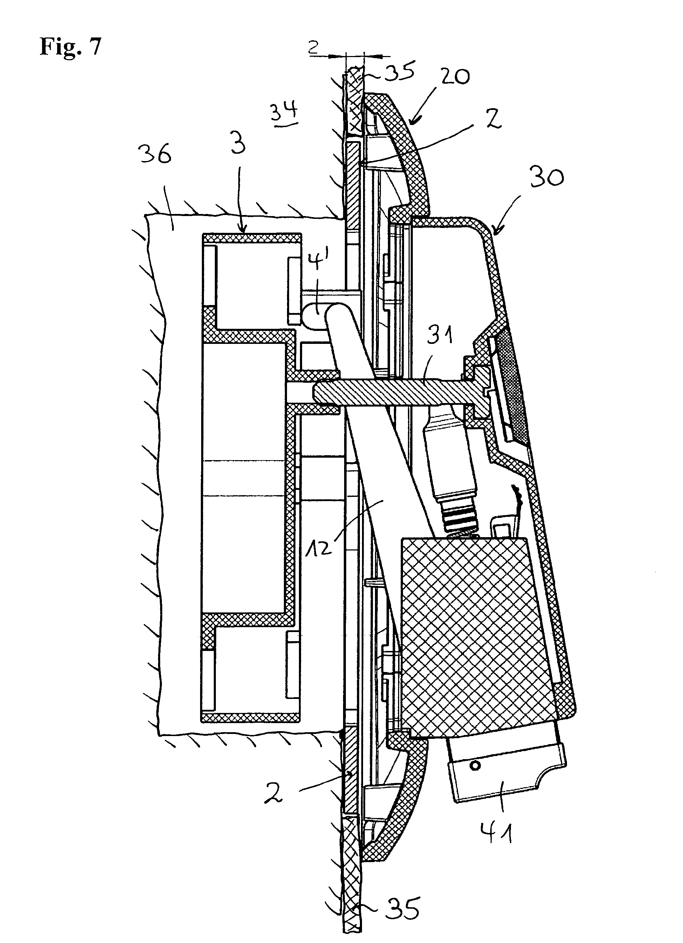

Figur 6 zeigt eine Schnittdarstellung, wobei die Wand 34 und die Wandausnehmung 36 angedeutet sind. In diesem Falle ist die Befestigungsplatte 2 und ist der Abdeckrahmen 20 bündig mit der Wand, welche noch nicht durch Renovationsarbeiten neu verputzt worden ist. Ersichtlich ist insbesondere das Aufliegen des Steckverbinder-Trägers 10 an der Vorderseite des Abdeckrahmens 20 sowie die Schwenkhalterung in Langlöchern 4, welche eine zusätzliche Translation der Schwenkbachse im Wesentlichen senkrecht zur Wand ermöglichen. Damit bleibt der Winkel der Arme 11 und 12 auch beim Auftragen einer zusätzlichen Verputzschicht auf die Wand im Wesentlichen gleich. Diese Situation ist in Figur 7 dargestellt, bei welcher die Befestigungsplatte auf der ursprünglichen Wand verblieben ist, ausserhalb der Befestigungsplatte aber eine zusätzliche Verputzschicht 35 aufgetragen worden ist. Entsprechend ist der Abdeckrahmen nach vorne weiter weg von der Befestigungsplatte positioniert, insbesondere um einen Betrag von z. B. bis zu 2 mm. Die Befestigungsplatte 2 ist somit nun in der renovierten Wand um bis zu 2 mm gegenüber der neuen Wandoberfläche nach innen versetzt angeordnet. Es ist ersichtlich, wie nun die Schwenkanlenkung des Steckverbinder-Trägers 10 im Langloch 4 nach vorne gewandert ist, so dass sich im Wesentlichen dieselben Verhältnisse ergeben, wie bei der vorherigen Figur 6.

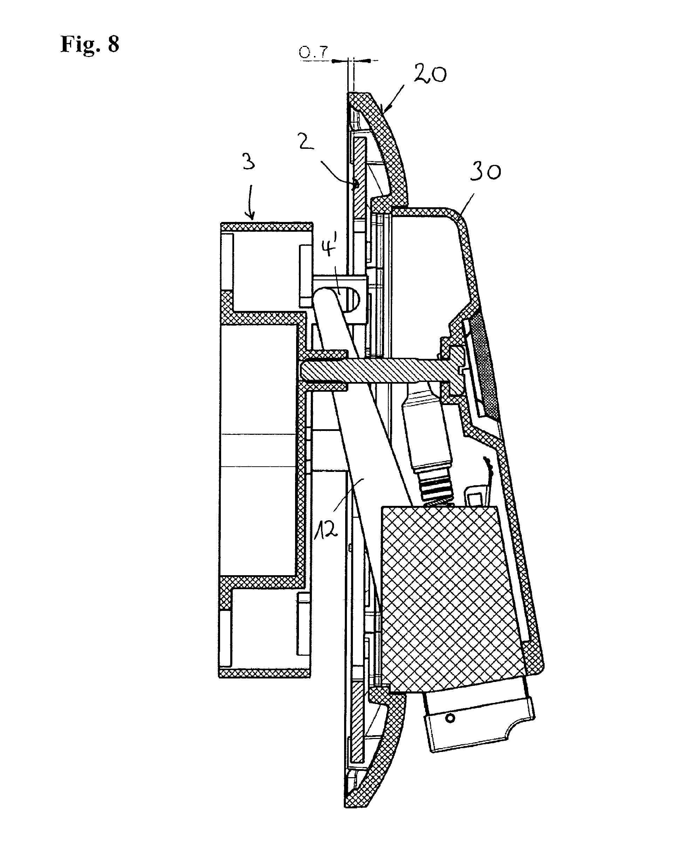

Figur 8 zeigt ein Beispiel, bei welcher die Befestigungsplatte z.B. um 0,7 mm nach vorne gegenüber dem Abdeckrahmen versetzt ist, z.B. bei Montage der Anschlussdose zusammen mit einer nicht dargestellten Hohlwanddose, die die Befestigungsplatte etwas nach vorne rückt, in eine Leichtbauwand oder in ein Möbel. Es ist ersichtlich, wie nun die Träger 11 und 12 des Steckverbinder-Träger 10 im Langloch ganz nach hinten zu liegen kommen, so dass sich im Wesentlichen wieder dieselbe Lage des Steckverbinder-Träger ergibt.

## Patentansprüche

1. Anschlussdose (1), umfassend eine zur Wandmontage ausgeführte Befestigungsplatte (2), eine an der Befestigungsplatte befestigte Kabelaufnahme, insbesondere eine Haspel (3), und einen Steckverbinder-Träger (10), **dadurch gekennzeichnet, dass** der Steckverbinder-Träger schwenkbar an der Kabelaufnahme bzw. Haspel (3) angelenkt und an einem die Befestigungsplatte (2) allseitig überragenden und gegen Sicht abdeckenden Rahmen (20) aufliegend angeordnet ist.

2. Anschlussdose nach Anspruch 1, **dadurch gekennzeichnet, dass** die Kabelaufnahme bzw. Haspel an der Hinterseite der Befestigungsplatte angeordnet ist.

3. Anschlussdose nach Anspruch 1 oder 2, **dadurch gekennzeichnet, dass** der Steckverbinder-Träger (10) mindestens einen nach oben ragenden Arm (11; 12) aufweist, der über jeweils mindestens einen Zapfen (13; 14) die Schwenkverbindung mit mindestens einer entsprechenden Zapfenaufnahme (4) an der Kabelaufnahme bzw. Haspel (3) bildet.

4. Anschlussdose nach Anspruch 3, **dadurch gekennzeichnet, dass** die Zapfenaufnahme von einem Langloch (4) gebildet ist.

5. Anschlussdose nach Anspruch 1 oder 2, **dadurch gekennzeichnet, dass** der Steckverbinder-Träger (10) mindestens einen nach oben ragenden Arm (11; 12) aufweist, der über jeweils mindestens ein elastisches Scharnier einstückig mit der Kabelaufnahme bzw. Haspel (3) verbunden ist.

6. Anschlussdose nach Anspruch 1 oder 2, **dadurch gekennzeichnet, dass** der Steckverbinder-Träger (10) mindestens einen nach oben ragenden Arm (11; 12) aufweist, welcher in seiner Ruhestellung den Steckverbinder-Träger am Abdeckrahmen aufliegend hält und der als elastisch verformbarer Arm ausgestaltet ist, der die Schwenkbewegung ermöglicht.

7. Anschlussdose nach einem der Ansprüche 1 bis 6, **dadurch gekennzeichnet, dass** die Schwenkverbindung zwischen Kabelaufnahme bzw. Haspel und Steckverbinder-Träger mit einer Schwenkwinkelbegrenzung versehen ist.

8. Anschlussdose nach einem der Ansprüche 1 bis 7, **dadurch gekennzeichnet, dass** der Steckverbinder-Träger am Abdeckrahmen durch ein Befestigungsmittel lösbar befestigt ist, insbesondere durch eine Schnappverbindung.
